# EUROPEAN PATENT SPECIFICATION

(11) **EP 2 820 981 B1**
(45) Date of publication and mention of the grant of the patent: **28.12.2016**
(21) Application number: 14175760.9
(22) Date of filing: 04.07.2014
(51) Int. Cl.: A47J 31/06, A47J 31/44

(54) **Beverage production machine**
Getränkeherstellungsmaschine
Machine de production de boisson

(30) Priority: 05.07.2013 IT MI20131131
(43) Date of publication of application: 07.01.2015
(73) Proprietor: Sicom S.r.l., 21013 Gallarate (Varese) (IT)
(72) Inventor: Berger, Simona, 20080 Basiglio (Milano) (IT)
(74) Representative: Rapisardi, Mariacristina

(56) References cited:
- EP-A1- 0 468 080
- EP-A1- 0 471 094
- EP-A1- 1 774 879
- WO-A2-2010/134054
- WO-A2-2011/077317
- US-A1- 2008 041 232

## Description

The present invention relates to a highly flexible use beverage production machine, and in particular to a machine operating with a disposable capsule containing the substance from which the beverage is obtained.

The machine to which reference is made is of the type that can produce in some versions exclusively aromatic beverages such as coffee or tea from capsules containing powders or freeze-dried substances, in other versions mineralised water and any other beverage in general from capsules containing liquid concentrates and in other versions both types of beverages.

As is known, coffee machines are widespread on the market suitable to operate with only one specific type of capsule configured to be positioned in a relevant housing provided along the infusion circuit which is thus "closed" for the launch of the beverage preparation cycle.

The clear limit is due to the fact that when capsules of different types are replaced the machine cannot operate correctly since the "closure" of the infusion circuit is impossible or takes place partially or incompletely or defectively.

The user does not therefore have the possibility to choose the capsule that they prefer and therefore the beverage that they prefer, having the availability of a rigid operating machine which only enables the use of one type of capsule.

EP0468080 discloses an infusion unit according to preamble of claim 1.

WO2011/077317 and WO2010/134054 disclose an infusion unit equipped with a sliding drawer housing a cup containing a beverage capsule to be aligned to a water dispensing terminal.

The technical task of the present invention is, therefore, to provide a machine for preparing a beverage of the type described above which obviates the above-described technical drawbacks of the prior art.

Within the scope of this technical task an object of the invention is to provide a machine for the preparation of a beverage that allows dispensing with different types of capsules.

Another object of the invention is to provide a machine for the preparation of a beverage that has high flexibility of use for dispensing with different types of capsules whilst maintaining high constructive simplicity.

Furthermore, as is known, for the taps and fittings, the hydraulic connections and the units brass material is generally used, or copper alloy, zinc and about 2% lead, since it is easier to process and therefore cheaper. Hence the parts in contact with the water, in a first work period, could release significant quantities of lead.

Another object of the invention is therefore that of using a machine for preparing a beverage using suitable alternative materials to brass to come into contact with foods, allowing the technical drawbacks of the prior art described above to be overcome, whilst maintaining high constructive simplicity and inexpensiveness.

The technical task, as well as this and other objects, according to the present invention are reached by providing a beverage production machine according to claim 1.

In a preferred embodiment of the machine the hydraulic circuit is made of PE, the water dispensing terminal is made of stainless steel, the different types of cups are made of acetal resin and the drawer of ABS.

In substance, in the present invention the cups act as interchangeable adaptors for allowing the actual machine to perform a correct dispensing cycle regardless of the type of capsule selected.

In substance, the operating field of the machine can be notably extended by replacing a cup with one of a different type: this replacement is simple and immediate since it requires a single manual operation without using specific tools. Other characteristics of the present invention are also defined in the claims which follow.

Further characteristics and advantages of the invention will more fully emerge from the description of a preferred but not exclusive embodiment of the beverage production machine according to the invention, illustrated by way of non-limiting example in the accompanying figures of the drawings, in which:
Figure 1 shows a plan view from above of a first type of cup;
Figure 2 shows a section of the cup of Figure 1 according to the line 2-2;
Figure 3 shows a plan view from above of a second type of cup;
Figure 4 shows a section of the cup of Figure 3 according to the line 4-4;

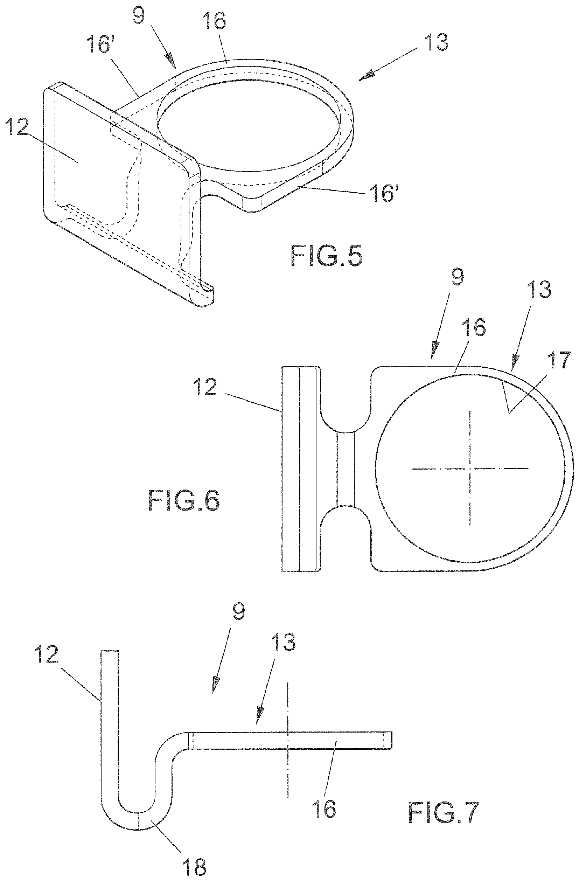

Figure 5 shows a perspective view of a preferred embodiment of the cup supporting drawer;
Figure 6 shows a plan view of the drawer of Figure 5;
Figure 7 shows a raised lateral view of the drawer of Figure 5;

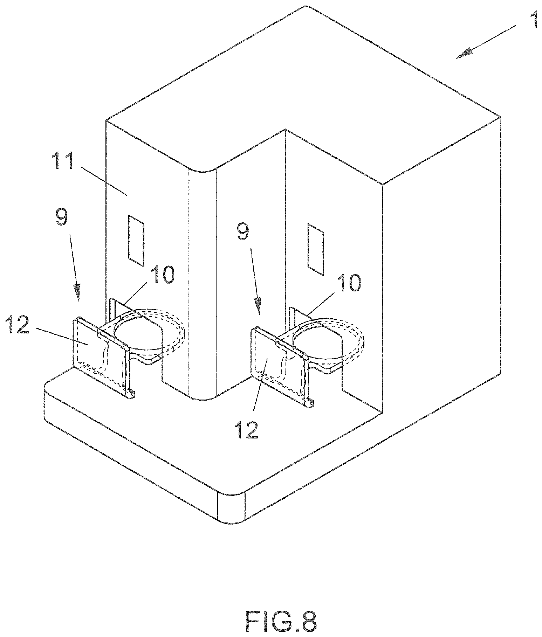

Figure 8 shows a perspective view of the machine in compliance with the invention for the combined production of both coffee and mineralised water and beverages in general;
Figures 9 and 10 show the sequential movement of the dispensing terminal from the opening position to the closing position of the dispensing circuit.

With reference to the cited figures, a machine 1 is shown for the preparation of a beverage.

The machine 1 in the illustrated case has a first hydraulic circuit (not shown) for preparing coffee and a second hydraulic circuit (not shown) for producing mineralised water and any other beverage in general

In the first hydraulic circuit, according to the prior art, a supply pump, a boiler and an infusion unit are provided, comprising a dispensing terminal adapted to introduce water into a disposable capsule (not shown) containing the substance to be infused.

Also the second circuit, according to the prior art, comprises a dispensing terminal adapted to introduce water into a disposable capsule (not shown) containing a liquid concentrate.

Obviously, the present invention more generally comprises a machine of the loadable type for its operation with a disposable capsule, also having a single hydraulic circuit for the production of mineralised water or a beverage in general or a hot or cold aromatic beverage.

The following description relates to a hydraulic circuit of the machine 1, but clearly refers to each hydraulic circuit envisaged in the machine.

A cup 2a, 2b is selectively associable with the hydraulic circuit chosen from a plurality of cups 2a, 2b of different types in each of which a corresponding type of capsule can be positioned containing a substance for preparing a beverage.

The hydraulic circuit is accessible to the cup 2a, 2b through a drawer 9 which is introducible into a compartment 10 of an outer delimiting wall 11 of the machine 1.

The drawer 9 has a front wall 12 for manually gripping it to insert it into the compartment 10, and a rear body 13 for supporting the cup 2a, 2b, having a supporting wall for the cup 2a, 2b.

The compartment 10 has horizontal linear sliding guides 100 for supporting the drawer 9.

The drawer 9 in its introduced position into the compartment 10 is arranged with the front wall 12 aligned with the outer delimiting wall 11 and the machine 1 and arranges in turn the cup 2a, 2b in an aligned position with the water dispensing terminal.

As we can see each cup 2a, 2b differs at least in terms of its internal dimensional and/or geometric characteristic to receive the corresponding type of capsule and has at least an exterior formation having a dimensional and/or geometric characteristic that is common to the other types of cups 2a, 2b.

The exterior formation of the cup 2a, 2b has a dimensional and/or geometric characteristic that is common to the other types of cups 2a, 2b adapted also for engagement with the supporting wall provided on the drawer 9.

The cup 2a, 2b comprises a lateral delimiting wall 4a, 4b generally but not necessarily cylindrical and a bottom 5a, 5b.

The bottom 5a, 5b is equipped with at least one dispensing hole 6a, 6b.

The formation comprises an outer perimetrical flange 7a, 7b of the cup 2a, 2b. The flange 7a, 7b has a flat upper surface 8a, 8b.

Advantageously the different types of cups 2a, 2b envisaged all have a flat upper surface 8a, 8b of the flange 7a, 7b in the shape of a circular crown having the same outer diameter D2 and the same inner diameter D1 which is variable according to the outer dimension of the capsule to be inserted.

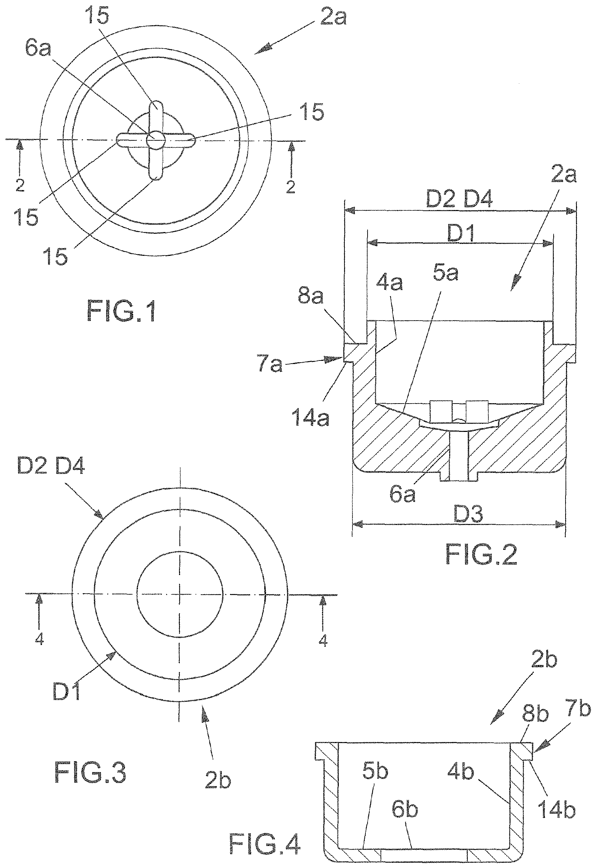

In the embodiment of figures 1 and 2, the flange 7a is withdrawn from the free edge of the top of the cup 2a while in the embodiment of Figures 3 and 4 the flange 7b is at the free edge of the top of the cup 2b.

The flange 7a, 7b also has a flat lower surface 14a, 14b for engagement with the supporting wall provided on the drawer 9.

Advantageously the different types of cups 2a, 2b all have a flat lower surface 14a, 14b of the flange 7a, 7b in the shape of a circular crown having the same inner diameter D3 and the same outer diameter D4.

The different types of cups 2a, 2b all have the same separation distance between the flat lower surface 14a, 14b of the flange 7a, 7b and the flat upper surface 8a, 8b of the flange 7a, 7b. In this way for all the different types of cups 2a, 2b the flat upper surface 8a, 8b of the flange 7a, 7b always remains at the same height above the rear body 13 of the drawer 9 and can hence be correctly guided by the linear guides 100 during the movement of the drawer 9.

In the embodiment illustrated in Figures 1 and 2 the cup 2a has its specific internal conformation with the bottom 5a tapered centrally having the dispensing hole 6a outlined by projections 15 engageable in recesses of a conjugated shape present on the tapered bottom of the corresponding type of capsule.

In the embodiment illustrated in Figures 3 and 4 the cup 2b has its specific internal conformation with the flat bottom 5b engageable with the flat bottom of the corresponding type of capsule.

In the drawer 9 the supporting wall envisaged in the rear body 13 comprises a bracket 16 internally having a through hole 17 calibrated for the centred positioning of the cup 2a, 2b.

The hole 17 of the bracket 16 has in particular a circular conformation having a smaller diameter than the outer diameter of the flange 7a, 7b.

The area of the cup 2a, 2b facing the hole 17 has at least one outer diameter equal to the diameter of the hole 17 so as to allow the centred positioning of the cup 2a, 2b in the hole 17.

The rear body 13 of the drawer 9 has a U-shaped tab 18 for connecting the bracket 16 and the front wall 12 which in turn is flat and extends orthogonally to the bracket 16 itself.

The drawer 9 is configured overall like a plate shaped to have the minimum possible dimensions so as to allow the positioning of the cup 2a, 2b suitable for bringing the capsule to close the hydraulic circuit without interfering with other internal parts of the machine 1.

In particular the bracket 16 has opposite parallel rectilinear outer perimetrical sides 16' which are slidingly engageable along the linear guides.

The operation of the machine 1 according to the invention appears clear from the description and illustration and, in particular, is substantially as follows.

Let's hypothesise that initially there is no cup 2a, 2b in the drawer 9.

The user chooses the desired type of capsule and introduces it into the corresponding cup 2a, 2b.

At this point the user extracts the drawer 9 from the compartment 10 and introduces the cup 2a, 2b into the hole 17 in the bracket 16 so that it stays resting on the drawer 9 due to the effect of the engagement of the lower surface 14a, 14b of the flange 7a, 7b on the bracket 16.

The user introduces the drawer 9 into the compartment 10 and the drawer 9 in the introduced position, brings the cup 2a, 2b into vertical alignment with the water dispensing terminal.

When the drink production cycle is activated, the water dispensing terminal is controlled to perform a vertical translation which brings it to be sealingly engaged against the upper surface of the capsule inserted in the cup.

At this point the dispensing of the water is activated through the hydraulic circuit: the water dispensed from the dispensing terminal crosses the capsule contained in the cup 2a, 2b and interacts with its contents to create the beverage that is then dispensed outwards through the hole 6a, 6b in the cup 2a, 2b.

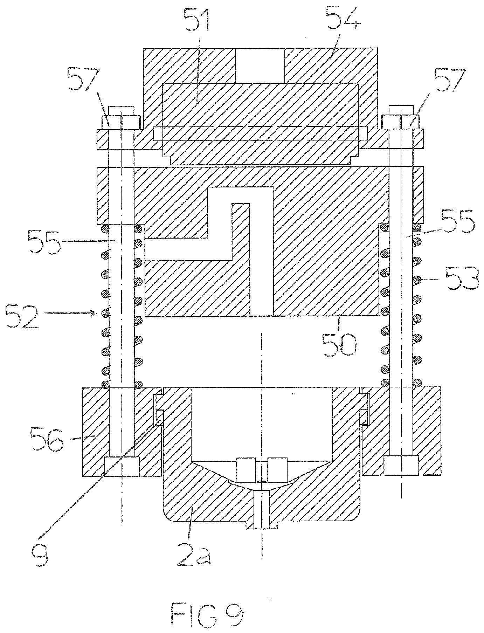

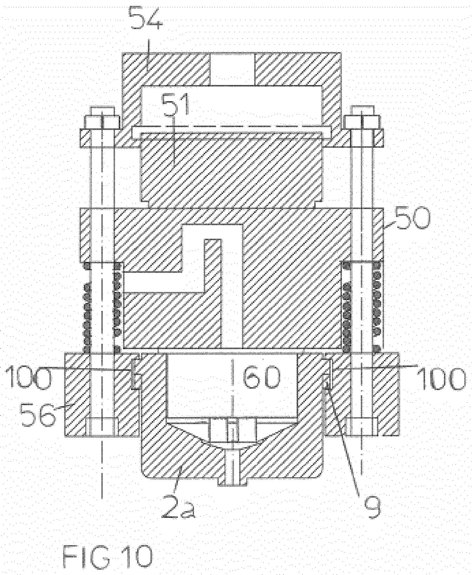

Figures 9 and 10 illustrate a preferred embodiment of the dispensing circuit.

The water dispensing terminal 50 is moved reversibly along a movement direction L orthogonal to the introduction direction of the drawer 9, between an opening position and a closing position of the dispensing circuit.

The water dispensing terminal 50 is moved by a hydraulic piston 51 and by elastic means 52 operating in contrast with the hydraulic piston 51.

In particular the water dispensing terminal 50 is activated by the hydraulic piston 51 in the movement direction L in the closing direction of the dispensing circuit and by the elastic means 52 still in the movement direction L but in the opening direction of the dispensing circuit.

The water dispensing terminal 50 is supported in translation along the movement direction L with the inclination of its axis adjustable in order to compensate for any superficial irregularities of the capsule 60 when it comes into contact with the latter during the closing of the dispensing circuit.

In the specific construction of the dispensing circuit the introduction direction of the drawer 9 is parallel to a horizontal resting surface of the machine, while the translation direction of the water dispensing terminal 50 and of the hydraulic piston 51 is vertical with respect to the horizontal resting surface of the machine. The elastic means 52 comprise helical springs 53 strained in compression arranged with a vertical axis to the horizontal resting surface.

The force exertable by the springs can be calibrated as required by modifying their rigidness or their initial compression.

The water dispensing terminal 50 and the hydraulic piston 51 are jointly mobile. The hydraulic piston 51 is slidable in a cylinder 54 and has a wet surface 51a and an opposite surface 51b in contact with the water dispensing terminal 50.

The cylinder 54 and the water dispensing terminal 50 are supported by translation guides defined by rods 55.

The rods 55 are fixed onto a base 56 that delimits the sliding compartment of the drawer 9. The water dispensing terminal 50 is arranged between the base 56 and the cylinder 54; the cylinder 54 is arranged between the water dispensing terminal 50 and an end stop 57 present on the translation guides, and the helical springs 53 are fitted onto the rods 55 and are interposed between the base 56 and the water dispensing terminal 50.

As can be deduced from the above description, during the dispensing the hydraulic thrust of the hydraulic piston 51 is active which, being stronger than the elastic reaction of the springs 53, keeps the water dispensing terminal 50 in the dispensing circuit closing position. Advantageously, the elastic reaction of the springs 53 during the movement of the water dispensing terminal 50 towards the closing position of the dispensing circuit allows gradual opening of the infusion water inlet passage into the capsule.

Furthermore, the water dispensing terminal 50, having the possibility to adjust the orientation of its axis when engaging the capsule, adapts to any superficial irregularities of the capsule so that the dispensing step can be performed without any leaks.

After dispensing the hydraulic force of the hydraulic piston 51 is released and the springs 53 automatically reopen the dispensing circuit, jointly shifting the water dispensing cycle 50 and the hydraulic piston 51.

In practice it has been noted how the machine according to the invention is particularly advantageous since it can always perform the correct dispensing with a plurality of different types of capsules in order to accommodate the user's tastes by simply selecting the appropriate cup. Advantageously the various cups not in use can be put back into a container, which is also integrable into the body of the machine 1.

In a possible variation of the beverage production machine, a plurality of hydraulic circuits, a plurality of water dispensing terminals associated with a corresponding hydraulic circuit and a plurality of different cups of different types are provided, in each of which a corresponding type of capsule containing a substance for preparing a beverage can be positioned.

Advantageously the dispensing terminal and the capsule made be constructed so that there is no cross contamination, i.e. no contact between the contents of the capsule and the parts of the machine.

The machine as conceived herein is susceptible to many modifications and variations, all falling within the scope of the invented concept; furthermore, all the details are replaceable by technically equivalent elements.

The materials used, as well as the dimensions, may in practice be of any type according to requirements and the state of the art.

## Claims

1. A beverage production machine (1) comprising at least one hydraulic circuit having at least one water dispensing terminal, and a plurality of cups (2a, 2b) of different types, in each of which a corresponding type of capsule containing a substance for preparing a beverage can be positioned, each cup (2a, 2b) differing at least in an internal dimensional and/or geometric characteristic adapted to receive the corresponding type of capsule, **characterised in that** it has at least one drawer (9) which is introducible into a compartment (10) of an outer delimiting wall (11) of the machine, said compartment (10) having horizontal linear sliding guides (100) for said drawer (9), said drawer (9) having a front wall (12) directly activatable manually for inserting said drawer (9) into said compartment (10) and a rear body (13) for supporting the cup (2a, 2b), said drawer (9), in the position of being introduced into the compartment (10), disposing said cup (2a, 2b) in a position aligned with said water dispensing terminal, **in that** each cup (2a, 2b) has at least one exterior formation having a dimensional and/or geometric characteristic in common with the other types of cup, said exterior formation being engageable with said rear body (13) for supporting the cup (2a, 2b), **in that** said formation comprises an outer perimetrical flange (7a, 7b) of said cup (2a, 2b), **in that** said rear body (13) has a supporting wall for said perimetrical flange (7a, 7b) of the cup (2a, 2b), **in that** said flange (7a, 7b) has a flat lower surface (14, 14b) for resting on said supporting wall, **in that** said different types of cups (2a, 2b) all have the same separation distance between said flat lower surface (14a, 14b) of the flange (7a, 7b) and a flat upper surface (8a, 8b) of the flange (7a, 7b) so that for different types of cups (2a, 2b) the flat upper surface (8a, 8b) of the flange (7 a, 7b) always remains at the same height above the rear body (13) of the drawer (9) and is guided by the linear guides (100) during the movement of the drawer (9).

2. The beverage production machine (1) according to the preceding claim, **characterized in that** said cup (2a, 2b) has at least one dispensing hole (6a, 6b) on the bottom.

3. The beverage production machine (1) according to any previous claim, **characterised in that** said different types of cups (2a, 2b) all have said flat lower surface (14a, 14b) of said flange (7a, 7b) in the shape of a circular crown having the same inner diameter (D3) and the same outer diameter (D4).

4. The beverage production machine (1) according to any previous claim , **characterized in that** said supporting wall is formed by a bracket (16) internally having a through hole (17) calibrated for centred positioning of the cup (2a, 2b).

5. The beverage production machine (1) according to any preceding claim, **characterized in that** said water dispensing terminal (50) is moved reversibly along a movement direction (L) orthogonal to the introduction direction of the drawer (9), between an opening position and a closing position of the dispensing circuit, said water dispensing terminal (50) being moved by a hydraulic piston (51) and by elastic means (52) operating in contrast with said hydraulic piston (51), said water dispensing terminal (50) being activatable by said hydraulic piston (51) in said movement direction (L) in the closing direction of said dispensing circuit and by said elastic means (52) in said movement direction (L) in the opening direction of said dispensing circuit.

6. The beverage production machine (1) according to the preceding claim, **characterised in that** said water dispensing terminal (50) is supported in translation along said movement direction (L) with the inclination of its axis adjustable in order to compensate for any superficial irregularities of the capsule with which it comes into contact during the closing of the dispensing circuit.

7. The beverage production machine (1) according to either of claims 5 and 6, **characterised in that** said water dispensing terminal (50) and said hydraulic piston (51) are jointly mobile.

8. The beverage production machine (1) according to any one of claims 5 to 7, **characterised in that** the introduction direction of the drawer (9) is parallel to a horizontal resting surface of the machine, the translation direction of the water dispensing terminal (50) and of the hydraulic piston (51) is vertical with respect to the horizontal resting surface, and the elastic means (52) comprise helical springs (53) strained in compression arranged with a vertical axis to the horizontal resting surface.

## Patentansprüche

1. Getränkeherstellungsmaschine (1), umfassend mindestens einen Hydraulikkreis, aufweisend mindestens einen Wasserausgabeendpunkt und eine Vielzahl an Schalen (2a, 2b) unterschiedlicher Typen, in denen jeweils eine entsprechender Kapseltyp, enthaltend eine Substanz zur Zubereitung eines Getränks, positioniert werden kann, wobei sich eine jede Schale (2a, 2b) mindestens hinsichtlich einer internen dimensionalen und/oder geometrischen Eigenschaft unterscheidet und ausgelegt ist, um den entsprechenden Kapseltyp aufzunehmen, **dadurch gekennzeichnet, dass** sie mindestens eine Schublade (9) aufweist, die in eine Unterteilung (10) einer äußeren Begrenzungswand (11) der Maschine eingeführt werden kann, wobei diese Unterteilung (10) horizontale lineare Gleitführungen (100) für die Schublade (9) aufweist, wobei die Schublade (9) eine frontseitige Wand (12) aufweist, die direkt manuell für das Einsetzen der Schublade (9) in die Unterteilung (10) aktivierbar ist, und einen rückseitigen Körper (13) zum Halten der Schale (2a, 2b), wobei die Schublade (9) in der Position des Einführens in die Unterteilung (10) die Schale (2a, 2b) in einer Position anordnet, die mit dem Wasserausgabeendpunkt ausgerichtet ist, und dadurch, dass eine jede Schale (2a, 2b) mindestens eine äußere Struktur besitzt, aufweisend eine mit den anderen Schalentypen gemeinsame dimensionale und/oder geometrische Eigenschaft, wobei die äußere Struktur mit dem rückseitigen Körper (13) zum Halten der Schale (2a, 2b) in Eingriff gelangen kann, und dadurch, dass die Struktur einen äußeren umfangsseitigen Flansch (7a, 7b) der Schale (2a, 2b) umfasst, und dadurch, dass der rückseitige Körper (13) eine Haltewand für den umfangsseitigen Flansch (7a, 7b) der Schale (2a, 2b) umfasst, und dadurch, dass der Flansch (7a, 7b) eine flache untere Oberfläche (14, 14b) aufweist, um auf der Haltewand aufzuliegen, und dadurch, dass die verschiedenen Schalentypen (2a, 2b) alle denselben Trennabstand zwischen der flachen unteren Oberfläche (14a, 14b) des Flanschs (7a, 7b) und einer flachen oberen Oberfläche (8a, 8b) des Flanschs (7a, 7b) aufweisen, sodass die flache obere Oberfläche (8a, 8b) des Flanschs (7a, 7b) bei verschiedenen Schalentypen (2a, 2b) stets auf derselben Höhe über dem rückseitigen Körper (13) der Schublade (9) bleibt und während der Bewegung der Schublade (9) von den Linearführungen (100) geführt wird.

2. Getränkeherstellungsmaschine (1) nach dem vorhergehenden Anspruch, **dadurch gekennzeichnet, dass** die Schale (2a, 2b) mindestens eine Ausgabeöffnung (6a, 6b) am Boden aufweist.

3. Getränkeherstellungsmaschine (1) nach einem der vorhergehenden Ansprüche, **dadurch gekennzeichnet, dass** die verschiedenen Schalentypen (2a, 2b) alle die flache untere Oberfläche (14a, 14b) des Flanschs (7a, 7b) in der Form einer kreisförmigen Krone aufweisen, aufweisend denselben Innendurchmesser (D3) und denselben Außendurchmesser (D4).

4. Getränkeherstellungsmaschine (1) nach einem der vorhergehenden Ansprüche, **dadurch gekennzeichnet, dass** die Haltewand durch einen Bügel (16) geformt ist, der innenseitig eine Durchführungsöffnung (17) aufweist, die für das zentrierte Positionieren der Schale (2a, 2b) kalibriert ist.

5. Getränkeherstellungsmaschine (1) nach einem der vorhergehenden Ansprüche, **dadurch gekennzeichnet, dass** der Wasserausgabeendpunkt (50) reversibel entlang einer Bewegungsrichtung (L) bewegt wird, die rechtwinklig zur Einführungsrichtung der Schublade (9) verläuft, zwischen einer Öffnungsposition und einer Schließposition des Ausgabekreislaufs, wobei der Wasserausgabeendpunkt (50) von einem Hydraulikkolben (51) und elastischen Mitteln (52) bewegt wird, die dem Hydraulikkolben (51) entgegenwirken, wobei der Wasserausgabeendpunkt (50) vom Hydraulikkolben (51) in der Bewegungsrichtung (L) in Schließrichtung des Ausgabekreislaufs und von den elastischen Mitteln (52) in der Bewegungsrichtung (L) in Öffnungsrichtung des Ausgabekreislaufs aktivierbar ist.

6. Getränkeherstellungsmaschine (1) nach dem vorhergehenden Anspruch, **dadurch gekennzeichnet, dass** der Wasserausgabeendpunkt (50) in Verschiebung entlang der Bewegungsrichtung (L) gehalten wird, wobei die Neigung seiner Achse verstellbar ist, um Unebenheiten der Oberfläche der Kapsel, mit denen er während des Schließens des Ausgabekreislaufs in Kontakt kommt, auszugleichen.

7. Getränkeherstellungsmaschine (1) nach Anspruch 5 oder 6, **dadurch gekennzeichnet, dass** der Wasserausgabeendpunkt (50) und der Hydraulikkolben (51) gemeinsam mobil sind.

8. Getränkeherstellungsmaschine (1) nach einem der Ansprüche 5 bis 7, **dadurch gekennzeichnet, dass** die Einführungsrichtung der Schublade (9) parallel zu einer horizontalen Auflagefläche der Maschine verläuft, wobei die Verschiebungsrichtung des Wasserausgabeendpunkts (50) und des Hydraulikkolbens (51) vertikal zur horizontalen Auflageoberfläche angeordnet ist und die elastischen Mittel (52) Schraubenfedern (53) umfassen, die in Kompression gespannt mit einer vertikalen Achse zur horizontalen Auflageoberfläche angeordnet sind.

## Revendications

1. Machine de production de boisson (1) comprenant au moins un circuit hydraulique comportant au moins un terminal de distribution d'eau et une pluralité de tasses (2a, 2b) de différents types, dans lesquelles un type correspondant de capsule, contenant une substance destinée à la préparation d'une boisson, peut être positionné, chaque tasse (2a, 2b) différant au moins selon une caractéristique dimensionnelle et/ou géométrique interne adaptée pour recevoir le type correspondant de capsule, **caractérisée en ce qu'**elle comporte au moins un tiroir (9) pouvant s'introduire dans un compartiment (10) d'une cloison de délimitation externe (11) de la machine, ledit compartiment (10) comportant des guides coulissants linéaires horizontaux (100) pour ledit tiroir (9), ledit tiroir (9) comportant une cloison antérieure (12) pouvant s'actionner directement de façon manuelle pour insérer ledit tiroir (9) dans ledit compartiment (10) et un corps postérieur (13) destiné à supporter la tasse (2a, 2b), ledit tiroir (9), lorsqu'il se trouve introduit dans le compartiment (10), disposant ladite tasse (2a, 2b) dans une position alignée au dit terminal de distribution d'eau, **en ce que** chaque tasse (2a, 2b) comporte au moins une forme externe comportant une caractéristique dimensionnelle et/ou géométrique adaptée commune avec les autres types de tasse, ladite forme externe pouvant se mettre en prise avec ledit corps postérieur (13) pour supporter la tasse (2a, 2b ), **en ce que** ladite forme comprend une bride périphérique externe (7a, 7b) de ladite tasse (2a, 2b), **en ce que** ledit corps postérieur (13) comporte une cloison de support pour ladite bride périphérique (7a, 7b) de la tasse (2a, 2b), **en ce que** ladite bride (7a, 7b) possède une surface inférieure plate (14, 14b) pour se mettre en appui sur ladite cloison de support, **en ce que** lesdits différents types de tasses (2a, 2b) comportent tous la même distance de séparation entre ladite surface inférieure plate (14a, 14b) de la bride (7a, 7b) et une surface supérieure plate (8a, 8b) de la bride (7a, 7b) de sorte que pour différents types de tasses (2a, 2b), la surface supérieure plate (8a, 8b) de la bride (7a, 7b) reste toujours à la même hauteur au-dessus du corps postérieur (13) du tiroir (9) et est guidée par les guides linéaires (100) lors du déplacement du tiroir (9).

2. Machine de production de boisson (1) selon la revendication précédente, **caractérisée en ce que** ladite tasse (2a, 2b) comporte au moins un orifice de distribution (6a, 6b) sur le fond.

3. Machine de production de boisson (1) selon l'une quelconque des revendications précédentes, **caractérisée en ce que** lesdits différents types de tasses (2a, 2b) comportent tous ladite surface inférieure plate (14a, 14b) de ladite bride (7a, 7b) se présentant sous la forme d'une couronne circulaire ayant le même diamètre intérieur (D3) et le même diamètre extérieur (D4).

4. Machine de production de boisson (1) selon l'une quelconque des revendications précédentes, **caractérisée en ce que** ladite cloison de support est formée par un support (16) comportant en son sein un trou passant (17) calibré pour un positionnement centré de la tasse (2a, 2b).

5. Machine de production de boisson (1) selon l'une quelconque des revendications précédentes, **caractérisée en ce que** ledit terminal de distribution d'eau (50) est déplacé de façon réversible le long d'un sens de déplacement (L) orthogonal au sens d'introduction du tiroir (9), entre une position d'ouverture et une position de fermeture du circuit de distribution, ledit terminal de distribution d'eau (50) étant déplacé par un piston hydraulique (51) et par des moyens élastiques (52) fonctionnant en opposition au dit piston hydraulique (51), ledit terminal de distribution d'eau (50) pouvant être actionné par ledit piston hydraulique (51) dans ledit sens de déplacement (L) dans le sens de fermeture dudit circuit de distribution et par lesdits moyens élastiques (52) dans ledit sens de déplacement (L) dans le sens d'ouverture dudit circuit de distribution.

6. Machine de production de boisson (1) selon la revendication précédente, **caractérisée en ce que** ledit terminal de distribution d'eau (50) est supporté en translation le long dudit sens de déplacement (L) avec l'inclinaison de son axe réglable afin de compenser toute irrégularité de la surface de la capsule avec laquelle il se met en contact lors de la fermeture du circuit de distribution.

7. Machine de production de boisson (1) selon l'une quelconque des revendications 5 et 6, **caractérisée en ce que** le terminal de distribution d'eau (50) et ledit piston hydraulique (51) sont mobiles ensemble.

8. Machine de production de boisson (1) selon l'une quelconque des revendications de 5 à 7, **caractérisée en ce que** le sens d'introduction du tiroir (9) est parallèle à une surface d'appui horizontale de la machine, le sens de translation du terminal de distribution d'eau (50) et du piston hydraulique (51) étant vertical par rapport à la surface d'appui horizontale, et les moyens élastiques (52) comprennent des ressorts hélicoïdaux (53) comprimés disposés avec un axe vertical par rapport à la surface d'appui horizontale.
